**Europäisches Patentamt**

**European Patent Office**

**Office européen des brevets**

(19)

(11) Publication number: **0 119 327**
**B1**

## (12) EUROPEAN PATENT SPECIFICATION

(45) Date of publication of patent specification: **07.01.87**

(21) Application number: **83200379.2**

(22) Date of filing: **18.03.83**

(51) Int. Cl.⁴: **G 01 P 5/12,** G 01 F 1/68, H 01 L 27/00

(54) **Device for measuring the flow velocity of a medium.**

(43) Date of publication of application:
**26.09.84 Bulletin 84/39**

(45) Publication of the grant of the patent:
**07.01.87 Bulletin 87/02**

(84) Designated Contracting States:
**AT BE CH DE FR GB IT LI LU NL SE**

(56) References cited:
**DE-A-2 021 489**
**GB-A-1 463 507**
**US-A-3 996 799**

**SOVIET INVENTIONS ILLUSTRATED, section R, week B 47, January 9, 1980 DERWENT PUBLICATIONS LTD., London; R 17**

(73) Proprietor: **van Putten, Antonius Ferdinandus Petrus**
**90 Sparrenlaan**
**NL-5553 CZ Valkenswaard (NL)**

(72) Inventor: **van Putten, Antonius Ferdinandus Petrus**
**90 Sparrenlaan**
**NL-5553 CZ Valkenswaard (NL)**

(74) Representative: **Timmers, Cornelis Herman Johannes et al**
**EXTERPATENT Willem Witsenplein 4**
**NL-2596 BK 's-Gravenhage (NL)**

Courier Press, Leamington Spa, England.

## Description

This invention relates to a device for measuring the flow velocity of a medium comprising a chip, a first pair of flat temperature sensitive elongate sensing resistors deposited on said chip with their respective longitudinal axes including an angle of about 90°, a second pair of flat temperature sensitive resistors on said chip, said first pair of resistors being connected with said second pair of resistors in a first bridge configuration of which two opposite points are connected to a power source, the two other opposite points of said bridge configuration forming the output of said first bridge and being connected to the inputs of a first differential amplifier.

Such a device is known from US—A—3,996,799. As described in this Patent Specification, particularly column 2 lines 47—55, the fact that it will in most cases be impossible to obtain four perfectly equal resistors makes it necessary to provide for a compensation for changes in ambient temperature and as described this is obtained by deriving a temperature-dependent signal from one of the resistors and adding it as a compensating signal to the measuring signal. The first differential amplifier is connected with its inputs to the output points of the bridge; a second differential amplifier is connected with its imputs to one of the bridge resistors and the output signals of both the first and the second amplifier are added to a third amplifier.

Although this known device works satisfactorily in many applications the compensation for changes of ambient temperature can be insufficient in those cases where a very small medium flow must be measured.

The invention aims to provide an improved device which has an equal sensitivity but a better compensation for changes of ambient temperature.

To this end the device comprises a third pair of flat temperature sensitive elongate sensing resistors having the same characteristics as the first pair of resistors, the members of the third pair being deposited on said chip respectively parallel to the members of the first pair and interconnected with two further flat temperature sensitive resistors on said chip in a second bridge configuration of which two opposite points are connected to the same power source as to which are connected the opposite points of the first bridge configuration and the other opposite points of the second bridge form the output of the second bridge and are connected to the inputs of a second differential amplifier, the outputs of said first and second amplifiers being connected to the inputs of a third differential amplifier, the corresponding output points of the first and second bridges respectively being connected to corresponding inputs of the first and second amplifiers respectively, the arrangement of the resistors being such that the output points of each bridge lie adjacent to the power input points of the other bridge.

said first and second bridges having similar unbalance characteristics under no-flow conditions.

As a result of this particular configuration corresponding inputs of the first and second differential amplifiers are under flow conditions supplied with signals of different polarity resulting into an output signal at the output of the third amplifier representing the flow velocity but, as the bridge unbalance under no-flow conditions at constant or changing ambient temperature is similar for the two respective bridges, corresponding inputs of the first and second differential amplifiers are supplied with a signal of the same polarity so that the resulting output signals of the first and second amplifiers are cancelled out in the third differential amplifier. As a result there is no, or very little, fault in the measuring signal or influence of the ambient temperature upon the measuring signal of the device and effective sensitivity is greatly enhanced.

Preferably said chip is an insulating silicon semiconductor chip while at least the first and second differential amplifiers are each made as an integrated circuit of very small dimensions of which the components are deposited as the semiconductor chip in the space delimited by the sensing resistors.

The condition that the first and second bridges have similar unbalance characteristics under no-flow conditions can be met by selecting suitable chips with resistors from a manufacturing run, accepting the ones that fulfil the condition and rejecting the others. However, it is also possible to obtain the similar unbalance characteristics by controlled doping of the semiconductor material during manufacture.

The invention will be elucidated on the hand of the drawings.

Fig. 1 is a diagram of the device according to the invention;

Fig. 2 is a plan view of the semiconductor chip with the resistors and amplifiers thereon indicated schematically;

Fig. 3 is a plan view of a practical embodiment of the invention.

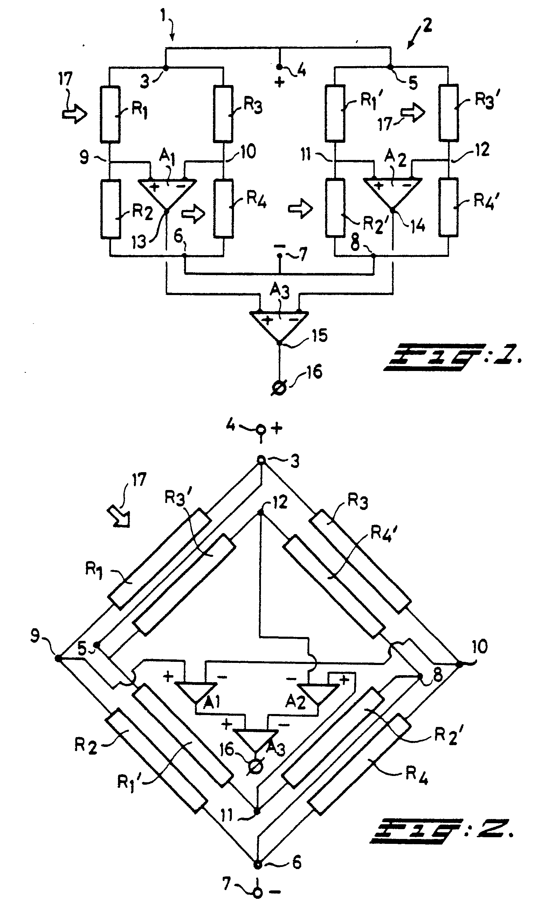

Fig. 1 shows two bridge circuits, the first one indicated with the reference numeral 1 and the second one indicated by the reference numeral 2. The first bridge comprises the resistors R1, R2, R3 and R4 and the second one comprises the resistors R1', R2', R3', R4'.

The common point 3 of the resistors R1 and R3 of bridge 1 is connected to the +terminal 4, to which is also connected the common point 5 of the resistors R1' and R3'; the common point 6 of the resistors R2 and R4 is connected to the −terminal 7 to which is also connected the common point 8 of the resistors R2' and R4'. Points 4 and 7 are connected to a suitable power source.

The output signal of bridge 1 is supplied to amplifier A1 and to this end the common point 9 of resistors R1 and R2 is connected to the +input of this amplifier while the common point 10 of resistors R3 and R4 is connected to the − or inverting input of this amplifier. In the same way the output signal of the bridge 2 is supplied to the amplifier A2, the common point 11 of resistors R1′ and R2′ being connected to the +input of amplifier A2 and the common point 12 of resistors R3′ and R4′ being connected to the −input of amplifier A2.

The output 13 of amplifier A1 is connected to the +input of amplifier A3 while the output 14 of amplifier A2 is connected to the −input of amplifier A3; the output 15 of amplifier A3 is connected to the output terminal 16 on which the output signal appears.

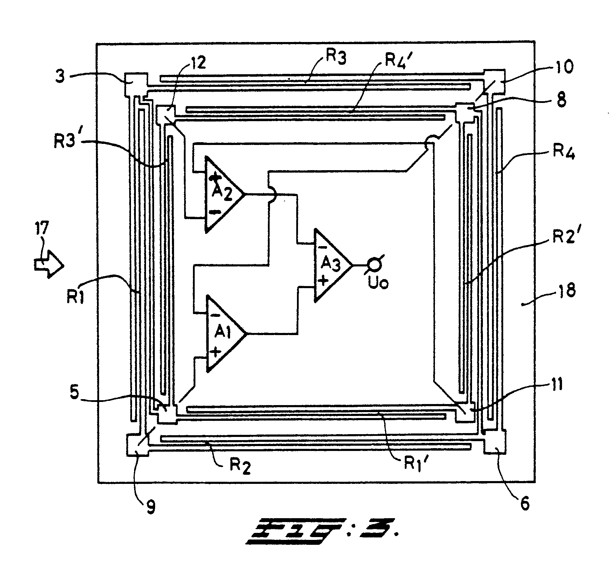

The resistors are arranged on the chip 18 in such a way (which will be discussed in detail hereinafter) that the sensing resistors R1 and R4 as well as the sensing resistors R2′ and R3′ lie perpendicular to the flow to be measured. The arrangement of the resistors on the chip with respect to each other is schematically illustrated in figure 2; the direction of flow is indicated in both the figures 1 and 2 by the arrow 17.

The respective bridge signals result from the fact that the heat transfer from the resistors to the medium which flows around it (in the direction of arrow 17) is greater for the resistors which are normal to the flow (in this case the resistors R1, R4, R2′ and R3′) than for the resistors which are parallel to the flow (the resistors R2, R3, R1′ and R4′). As discussed in U.S—A—3,996,799 the heat transfer characteristics are generally represented by the formula

$$Nu = A + Q\ \emptyset\ (\alpha)$$

in which Nu is the Nusselt number for total heat transfer, A is a structure-dependent constant associated with nonflow-dependent heat losses, Q is the flow-dependent forced-convection heat transfer and $\emptyset$ ($\alpha$) is a function that accounts for the dependence of the heat flow on the angle $\alpha$ between the normal to the diffused resistor and the direction of the flow. The principle of the sensor is thus based of the difference $\emptyset$ ($\alpha$) between the parallel and the normal resistors. To keep the term A, which is mainly a result of heat conduction within the substrate as small as possible a chip is used with a thickness of 50 μm. As a result of boundary layer effects the heat transfer of the sensing resistors of the inner bridge will be somewhat smaller than the heat transfer of the resistors of the outer bridge but as the respective output signals are added this is of no consequence.

Under flow conditions the resistive value of the resistors R1 and R4, R2′ and R3′ will decrease. This means that the point 9 goes positive and the point 10 goes negative, resulting into a positive output signal on the output 13 of amplifier A1. Point 11 goes negative and point 12 goes positive, resulting into a negative output signal on terminal 14 of amplifier A2. As the output terminal of amplifier A1 is connected to the positive input of amplifier A3 and the output terminal 14 of amplifier A2 to the negative input of amplifier A3 a positive output signal, representing the measuring signal appears at the output 15 of amplifier A3 and thus at the output terminal 16 of the device.

For changes in ambient temperature the situation is different. As stated hereinbefore the resistors must be such that both bridges show the same unbalance characteristics under no flow conditions, which means e.g. that, when no flow is present, point 9 is for instance always slightly positive with respect to point 10 and similarly point 11 is slightly positive with respect to point 12. As a result the output signal of amplifier A2 is also slightly positive; both the + and − inputs of amplifier A3 are fed with a positive signal which cancel each other out. As a result the output signal of amplifier A3 is nearly zero so that the influence of the ambient temperature is very small indeed.

It will be seen that the same way as the influence of ambient temperature under no flow condition is compensated for the described configuration also compensates for changes in temperature of the flowing medium under flow conditions.

Fig. 3 shows on a very enlarged scale how the respective resistors of the bridges 1 and 2 are formed on a single silicon chip in the same way as described in the US—A—3.996.799. The silicon chip 18 carries eight p-type diffused resistors, obtained by the usual planar technology. The eight contact areas are denoted with the same reference numerals as the common points in figures 1 and 2. The resistors R1 and R3′ on the one hand and R2′ and R4 on the other hand are normal to the flow-direction (indicated by the arrow 17).

Preferably the respective resistors of the two bridges have the same ohmic value. The length of the resistors of the second bridge is, as shown, necessarily somewhat smaller than the length of the resistors of the first bridge. However, the resistance of each resistor is determined by the width to length ratio or the amount of squares R connected in parallel and a fixed scaling factor in the design of the chip gives the possibility to maintain the width/length ratio as a constant factor and thus gives an easy method to obtain resistors with the same nominal ohmic value. Tests show the sensitivity of each bridge being of the same order as the sensitivity of the single bridge according to U.S—A—3.996.799 but with a greatly reduced error signal.

## Claims

1. Device for measuring the flow velocity for a medium comprising a chip (18) a first pair of flat temperature sensitive elongate sensing resistors (R1, R3) deposited on said chip (18) with their respective longitudinal axes including an angle of about 90°, a second pair of flat temperature sensitive resistors (R2, R4) on said chip (18), said first pair of resistors (R1, R3) being connected with said second pair of resistors (R2, R4) in a first bridge configuration (1) of which two opposite points (3, 6) are connected to a power source (4, 7), the two other opposite points (9, 10) of said bridge configuration (1) forming the output of said first bridge and being connected to the inputs (+, −) of a first differential amplifier (A1), characterised by a third pair (R3', R4') of flat temperature sensitive elongate sensing resistors having the same characteristics as the first pair of resistors (R1, R3) the members of the third pair being deposited on said chip (18) respectively parallel to the members of the first pair and interconnected with two further flat temperature sensitive resistors (R1', R2') on said chip in a second bridge configuration (2) of which two opposite points (5, 8) are connected to the same power source (4, 7) as to which are connected the opposite points (3, 6) of the first bridge configuration (1) and the other opposite points (11, 12) of the second bridge from the output of the second bridge and are connected to the inputs (+, −) of a second differential amplifier (A2) the outputs (13, 14) of said first and second amplifiers (A1, A2) being connected to the inputs (+, −) of a third differential amplifier (A3), the corresponding output points (9, 10, 11, 12) of the first (1) and second (2) bridges respectively being connected to corresponding inputs (+, −, +, −) of the first (A1) and second (A2) amplifiers respectively, the arrangement of the resistors being such that the output points (9, 10, 11, 12) of each bridge (1, 2) lie adjacent to the power input points (5, 8, 6, 3) of the other bridge, said first and second bridges having similar unbalance characteristics under no-flow conditions.

2. Device according to claim 1, characterised in that said chip (18) is an insulating silicon semiconductor chip while at least the first and second differential amplifiers (A1, A2) are each made as an integrated circuit of very small dimensions of which the components are deposited on the semiconductor chip (18) in the space delimited by the sensing resistors (R1, R2, R3, R4).

3. Device according to claim 2, characterised in that the unbalance characteristics of the respective bridges are obtained by controlled doping of the semiconductor material during manufacture.

**Patentansprüche**

1. Vorrichtung zur Messung der Fließgeschwindigkeit eines Mediums mit einem Chip (18), einem ersten Paar flacher temperaturempfindlicher langgestreckter Abtastwiderstände (R1, R3) die auf dem Chip (18) in der Weise angebracht sind, daß ihre Längsachsen einen Winkel von etwa 90° einschließen, einem zweiten Paar flacher temperaturempfindlicher Widerstände (R2, R4) auf dem Chip (18), wobei das erste Widerstandspaar (R1, R3) mit dem zweiten Widerstandspaar (R2, R4) in einer ersten Brückenkonfiguration (1), deren gegenüberliegende Punkte (3, 6) mit einer Spannungsquelle (4, 7) verbunden sind und deren beide anderen gegenüberliegenden Punkte (9, 10) den Ausgang der ersten Brücke darstellen und mit den Eingängen (+, −) eines ersten Differentialverstärkers (A1) verbunden sind, verbunden ist, gekennzeichnet durch ein drittes Paar flacher temperaturempfindlicher langgestreckter Abtastwiderstände (R3', R4') mit der gleichen Charakteristik wie dem ersten Widerstandspaar (R1, R3), wobei die Elemente des dritten Paares auf dem Chip (18) parallel zu den Elementen des ersten Paares angebracht sind und mit zwei weiteren flachen temperaturempfindlichen . Widerständen (R1', R2') in einer zweiten Brückenkonfiguration (2) auf dem Chip verbunden sind, deren gegenüberliegende Punkte (5, 8) an die gleiche Spannungsquelle (4, 7), an die auch die gegenüberliegenden Punke (3, 6) der ersten Brückenkonfiguration (1) angeschlossen sind, angeschlossen sind und der übrigen gegenüberliegenden Punkte (11, 12) der zweiten Brücke den Ausgang der zweiten Brücke darstellen und mit den Eingängen (+, −) eines zweiten Differentialverstärkers (A2) verbunden sind, dessen Ausgänge (13, 14) mit den Eingängen (+, −) eines dritten Differentialverstärkers (A3) verbunden sind, und die entsprechenden Ausgangspunkte (9, 10, 11, 12) der ersten (1) bzw. zweiten (2) Brücke mit den entsprechenden Eingängen (+, −, +, −) des ersten (A1) bzw. zweiten (A2) Verstärkers verbunden sind, und die Anordnung der Widerstände dergestalt ist, daß die Ausgangspunkte (9, 10, 11, 12) jeder Brücke (1, 2) in Nachbarschaft zu den Spannungseingangspunkten (5, 8, 6, 3) der anderen Brücke liegen, und die Charakteristik der Abgleichfehler der ersten und zweiten Brücke bei einer Fließgeschwindigkeit null ähnlich ist.

2. Vorrichtung nach Anspruch 1, dadurch gekennzeichnet, daß der Chip (18) ein nicht leitender Siliciumhalbleiterchip ist, während zumindest der erste und zweite Differentialverstärker (A1, A2) als integrierter Schaltkreis mit sehr geringen Dimensionen ausgebildet ist, wobei dessen Bauteile auf dem Halbleiterchip (18) auf den von den Abtastwiderständen (R1, R2, R3, R4) begrenzten Flächen angebracht sind.

3. Vorrichtung nach Anspruch 2, dadurch gekennzeichnet, daß die Charakteristik der Abgleichfehler beider Brücken durch kontrolliertes Dotieren des Halbleitermaterials während des Herstellungsprozesses erhalten wird.

**Revendications**

1. Dispositif pour mesurer la vitesse du courant d'un milieu, comprenant une puce (18), une première paire de résistances (R1, R3) plates de détection de forme allongées, sensibles à la température, déposées sur la dite puce (18) avec leurs axes longitudinaux respectifs formant un angle d'environ 90°, une seconde paire de résistances (R2, R4) plates, sensibles à la température, déposées sur la dite puce (18), ladite première paire de résistances (R1, R3) étant reliées à la seconde paire de résistances (R2, R4) dans un premier pont (1) dont deux points opposés (3, 6) sont reliés à une source d'alimentation (4, 7), les deux autres points (9, 10) dudit pont (1) formant la sortie dudit premier pont et étant reliés aux entrées (+, −) d'un premier amplificateur (A1), caractérisé en ce qu'il comporte une troisième paire de résistances plates de détection (R3', R4') de forme allongées et sensibles à la température ayant les mêmes caractéristiques que la première paire de résistances (R1, R3), les éléments de la troisième paire étant déposés sur ladite puce (18) respectivement parallèles aux éléments de la première paire et interconnectés avec deux autre résistances (R1', R2') plates, sensibles à la température, déposées sur ladite puce (18) dans un second pont (2) dont deux points opposés (5, 8) sont reliés à la même source d'alimentation (4, 7) que les points opposés (3, 6) du premier pont (1) et dont lesautres points opposés (11, 12) forment la sortie du second pont et sont reliés aux entrées (+, −) d'un second amplificateur différentiel (A2), les sorties (13, 14) du premier amplificateur (A1) et du second amplificateur (A2) étant reliées aux entrées (+, −) d'un troisième amplificateur différentiel (A3), les points de sortie correspondants (9, 10, 11, 12) du premier (1) et du second pont (2) étant reliés aux entrées (+, −, +, −) du premier amplificateur (A1) et du second amplificateur (A2), la disposition des résistances étant telle que les points de sortie (9, 10, 11, 12) d'un pont (1) sont adjacents aux points d'alimentation (5, 8, 6, 3) de l'autre pont (2), lesdits premier et second ponts ayant des caractéristiques de déséquilibre semblables en état de non-débit.

2. Dispositif selon la revendication 1, caractérisé en ce que ladite puce (18) est une puce semiconductrice de silicium isolant alors que le premier et le second amplificateur différentiel (A1, A2) sont fabriqués comme un circuit intégré de très petite dimension dont les composants sont déposés sur la puce semiconductrice (18) dans l'espace délimité par les résistances de détection (R1, R2, R3, R4).

3. Dispositif selon la revendication 2, caractérisé en ce que les caractèristiques de déséquilibre des ponts respectifs sont obtenues par dopage contrôlé du matériau semiconducteur pendant la fabrication.

FIG.1.

FIG.2.

FIG. 3.